# EUROPÄISCHE PATENTSCHRIFT

(11) **EP 0 970 093 B1**
(45) Veröffentlichungstag und Bekanntmachung des Hinweises auf die Patenterteilung: **22.01.2003**
(21) Anmeldenummer: 98912335.1
(22) Anmeldetag: 19.02.1998
(51) Int. Cl.: C07F 9/30, C08K 5/5313

(54) **ALUMINIUMSALZE VON ALKYLHYDROXYMETHYLPHOSPHINSÄUREN**
ALUMINIUM SALTS OF ALKYLHYDROXYMETHYLPHOSPHINIC ACIDS
SELS D'ALUMINIUM D'ACIDES ALKYLHYDROXYMETHYLEPHOSPHINIQUES

(30) Priorität: 04.03.1997 DE 19708725
(43) Veröffentlichungstag der Anmeldung: 12.01.2000
(73) Patentinhaber: Ticona GmbH, 65451 Kelsterbach (DE)
(72) Erfinder: KLEINER, Hans-Jerg, D-61476 Kronberg (DE)
(86) Internationale Anmeldenummer: EP9800947
(87) Internationale Veröffentlichungsnummer: WO98039338

(56) Entgegenhaltungen:
- EP-A- 0 458 067
- EP-A- 0 699 708
- DE-A- 2 827 867
- DE-A- 2 915 116
- CHEMICAL ABSTRACTS, vol. 102, no. 2, 14.Januar 1985 Columbus, Ohio, US; abstract no. 008210, "Flameproofing textiles" XP002066269 & IL 60 453 * (YEDA RESEARCH AND DEVELOPMENT CO. LTD.;ISRAEL)

## Beschreibung

Die Erfindung betrifft neue Aluminiumsalze von Alkylhydroxymethylphosphinsäuren, ihre Herstellung und ihre Verwendung als Flammschutzmittel.

Polymere werden häufig dadurch flammfest gemacht, daß man diesen phosphorhaltige oder halogenhaltige Verbindungen oder Gemische davon zusetzt. Einige Polymere werden bei hohen Temperaturen, z.B. bei 250°C oder höheren Temperaturen verarbeitet. Aus diesem Grund eignen sich viele bekannte Flammhemmer nicht für solche Anwendungen, weil sie zu flüchtig oder nicht ausreichend hitzebeständig sind.

Alkalisalze von Dialkylphosphinsäuren sind thermisch stabil und bereits als flammhemmende Zusätze für Polyester vorgeschlagen (DE-A1-2 252 258). Sie müssen in Mengen bis zu 30 Gew.-% eingebracht werden und haben zum Teil einen ungünstigen korrosionsfördernden Einfluß auf die Verarbeitungsmaschinen.

Weiterhin sind die Salze von Dialkylphosphinsäuren mit einem Alkalimetall oder einem Metall aus der zweiten oder dritten Haupt- oder Nebengruppe des Periodensystems zur Herstellung flammwidriger Polyamid-Formmassen eingesetzt worden, insbesondere die Zinksalze (DE-A1-2 447 727). Schwerentflammbare Thermoplaste lassen sich auch herstellen durch den Einsatz der genannten Phosphinsäuresalze in Kombination mit Stickstoffbasen wie Melamin, Dicyandiamid oder Guanidin (DE-A1-28 27 867). Eine weitere große Klasse von Phosphinsäuresalzen sind die polymeren Metallphosphinate. Diese stellen nichtionische Koordinationskomplexe dar und sind in organischen Lösungsmitteln löslich. Sie sind als Flammschutzkomponenten geeignet für halogenierte aromatische Polymere sowie für Polyester (US 40 78 016; US 4180495), Polyamide (US 42 08 321) und Polyester/Polyamide (US 42 08 322). Nachteilig ist die im allgemeinen schwierige technische Herstellung dieser Metallphosphinatpolymeren.

Dialkylphosphinsäuren werden hergestellt durch radikalisch katalysierte Anlagerung von Olefinen an Phosphonigsäuremonoester und die anschließende Hydrolyse der so gewonnenen Dialkylphosphinsäureester. Die Phosphonigsäure-monoester gewinnt man durch Veresterung der phosphonigen Säuren. Die Verfahren sind technisch aufwendig und verlaufen über mehrere Stufen. Gesucht sind daher technisch einfache Herstellverfahren für Salze von Phosphinsäuren.

Die Aufgabe wird gelöst durch ein Verfahren zur Herstellung von Aluminiumsalzen der Alkylhydroxymethylphosphinsäuren der Formel (I) 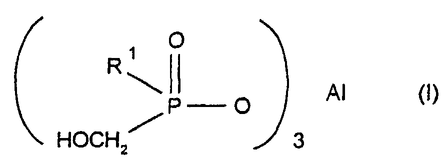 worin R¹ für einen geradkettigen oder verzweigten Alkylrest mit 1 bis 8 Kohlenstoffatomen, vorzugsweise Methyl, Ethyl, Propyl, Butyl oder Pentyl, steht, dadurch gekennzeichnet, daß man phosphonige Säuren der Formel (II) 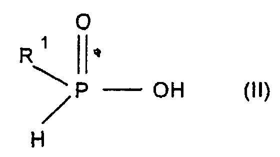 worin R¹ die oben angegebene Bedeutung hat, mit Aluminiumhydroxid und Formaldehyd und/oder Paraformaldehyd und/oder Trioxan in Wasser unter Druck bei 110-250°C umsetzt.

Es ist überraschend, daß im Zuge der Umsetzung keine Zersetzung der eingesetzten phosphonigen Säuren zu erkennen ist. Insbesondere weil bekannt ist, daß aliphatische phosphonige Säuren sich bereits unterhalb 100°C im Zuge einer Disproportionierung umwandeln (Methoden der Organischen Chemie Houben-Weyl, Band XII/1, Seite 64, 1963).

Als phosphonige Säuren werden vorzugsweise Methanphosphonige Säure, Ethanphosphonige Säure, Butanphosphonige Säure oder Pentanphosphonige Säure verwendet. Besonders bevorzugt ist methanphosphonige Säure.

Der Einsatz des Formaldehyds kann in wässeriger Lösung erfolgen. Ebenso können Paraformaldehyd oder Trioxan eingesetzt werden.
Der Einsatz weiterer Lösungsmittel außer Wasser ist möglich. Beispielsweise können Methanol, Isopropanol, Aceton oder Essigsäure eingesetzt werden. Die Durchführung des erfindungsgemäßen Verfahrens ohne Einsatz von weiteren organischen Lösungsmitteln ist aber bevorzugt. Das Verfahren wird so durchgeführt, daß die phosphonige Säure, Formaldehyd, Aluminiumhydroxid im Molverhältnis 3:3:1 in Wasser in einem Autoklaven unter Druck erhitzt werden bei Temperaturen von 110 bis 250°C, bevorzugt 130 bis 170°C. Nach beendeter Umsetzung wird abgekühlt und abgesaugt. Die Aluminiumsalze der Alkylhydroxymethylphosphinsäuren werden anschließend scharf getrocknet, bevorzugt im Vakuum bei Temperaturen von 150 bis 200°C. Sie fallen dann praktisch wasserfrei an und sind sehr geeignet als Flammschutzmittel für thermoplastische Kunststoffe, z.B. für Polyester wie Polybutylenterephthalat.

Polyester sind Polymere, die wiederholende, über eine Estergruppe verbundene Einheiten in der Polymerkette enthalten. Polyester, die erfindungsgemäß eingesetzt werden können, sind beispielsweise in "Ullmann's encyclopedia of industrial chemistry", ed. Barbara Elvers, Vol. A21, Kapitel "Polyesters" (S. 227-251), VCH, Weinheim-Basel-Cambridge-New York 1992 beschrieben.

Die Menge des den Polymeren zuzusetzenden Phosphinsäuresalzes der allgemeinen Formel I kann innerhalb weiter Grenzen variieren. Im allgemeinen verwendet man 5 bis 30 Gew.-%, bezogen auf das Polymer. Die optimale Menge hängt von der Natur des Polymeren und der Art des eingesetzten Phosphinsäuresalzes ab und kann durch Versuche leicht bestimmt werden.

Die Phosphinsäuresalze gemäß der Erfindung können je nach Art des verwendeten Polymeren und der gewünschten Eigenschaften in verschiedener physikalischer Form angewendet werden. So können die Phosphinsäuresalze z.B. zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze gemäß der Erfindung sind thermisch stabil, zersetzen die Polymeren weder bei der Verarbeitung noch beinflußen sie den Herstellprozeß der Polyesterformmasse. Die Phosphinsäuresalze sind unter Herstellungs- und Verarbeitungsbedingungen für Polymere nicht flüchtig.

Das Phosphinsäuresalz kann in das Polymer eingearbeitet werden, indem beides vermischt und anschließend in einem Compoundieraggregat (z.B. in einem Zweischneckenextruder) das Polymer aufgeschmolzen und das Phosphinsäuresalz in der Polymerschmelze homogenisiert wird. Die Schmelze kann als Strang abgezogen, gekühlt und granuliert werden. Das Phosphinsäuresalz kann auch direkt in das Compoundieraggregat dosiert werden.

Es ist ebenso möglich, die flammhemmenden Zusätze einem fertigen Polyestergranulat beizumischen und direkt auf einer Spritzgießmaschine zu verarbeiten oder vorher in einem Extruder aufzuschmelzen, zu granulieren und nach einem Trocknungsprozeß zu verarbeiten.

Der flammhemmende Zusatz kann auch während der Polykondensation zugegeben werden.

Den Einstellungen können neben den erfindungsgemäßen Phosphinsäuresalzen auch Füll- und Verstärkungsstoffe wie Glasfasern, Glaskugeln oder Mineralien, wie Kreide zugesetzt werden. Daneben können die Produkte andere Zusätze wie Stabilisatoren, Gleitmittel, Farbmittel, Nucleierungsmittel oder Antistatika enthalten.

Die erfindungsgemäßen flammfesten Polyester eignen sich zur Herstellung von Formkörpern, Filmen, Fäden und Fasern, z.B. durch Spritzgießen, Extrudieren oder Verpressen.

### Beispiel 1

### Herstellung des Aluminiumsalzes der Hydroxymethyl-methylphosphinsäure unter Verwendung von Paraformaldehyd

728 g (9,1 Mol) Methanphosphonige Säure, 237 g (3,03 Mol) Aluminiumhydroxid, 273 g (9,1 Mol) Paraformaldehyd und 1440 g Wasser wurden in einem 5 I V4A-Autoklaven mit Flügelrührer gefüllt und 48 Stunden auf 150°C gehalten. Dabei stieg der Druck auf 3,5 bis 4 bar. Dann wurde gekühlt, abgesaugt, mit wenig Wasser gewaschen und bei 150°C im Vakuum-Trockenschrank getrocknet. Man erhielt 750 g Aluminiumsalz der Hydroxymethyl-methylphosphinsäure mit einem Schmelzpunkt oberhalb 360°C. Das entspricht einer Ausbeute von 70 % der Theorie.

| Ergebnis der Elementaranalyse: C₆H₁₈AlO₉P₃ (354) | | | | |
|---|---|---|---|---|
| berechnet | 20,3 % C | 5,08 % H | 26,3 % P | 7,63 % Al |
| gefunden | 18,5 % C | 5,20 % H | 25,6 % P | 8,80 % Al |

### Beispiel 2

### Herstellung des Aluminiumsalzes der Hydroxymethyl-methylphosphinsäure unter Verwendung von Formalinlösung

360 g (4,5 Mol) Methanphosphonige Säure, 117 g (1,5 Mol) Aluminiumhydroxid, 365 g (4,5 Mol) 37 %ige Formalinlösung und 671 g Wasser wurden in einem 2I-Autoklaven 48 Stunden bei 140°C gehalten. Dann wurde gekühlt, abgesaugt, gewaschen und bei 140°C im Vakuum-Trockenschrank getrocknet. Man erhielt 266 g Aluminiumsalz der Hydroxymethyl-methylphosphinsäure. Das Filtrat wurde im Vakuum von Wasser weitgehend befreit und der Rückstand mit Methanol digeriert. Dann wurde es abgesaugt, gewaschen und bei 140°C im Vakuum-Trockenschrank getrocknet. Man erhielt weitere 121 g, insgesamt also 387 g Aluminiumsalz der Hydroxymethyl-methylphosphinsäure. Das entspricht einer Ausbeute von 73 % der Theorie.

### Beispiel 3

Aus dem Aluminiumsalz der Hydroxymethylmethylphosphinsäure, wie in Beispiel 1 hergestellt, und Polybutylenterephthalat wurden mit 30 % Glasfasern verstärkte Compounds ohne weitere Zusätze hergestellt, Prüfkörper der Dicke 0,8 mm gespritzt und mit folgendem Ergebnis geprüft:

| Konzentration | Brandklasse | Bruchspannung | Bruchdehnung | E-Modul |
|---|---|---|---|---|
| % | UL94 | N/mm² | % | N/mm² |
| 20 | V2 | 107,3 | 1,8 | 10211 |

Prüfkörper ohne 30 % Glasfaser-Zusatz erzielten ebenfalls mit 20 % Aluminiumsalz die Brandklasse V2.

## Patentansprüche

1. Aluminiumsalze der Alkylhydroxymethylphosphinsäuren der Formel (I) 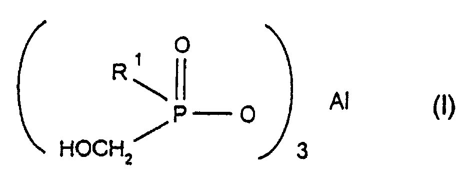 worin R¹ ein geradkettiger oder verzweigter Alkylrest mit 1 bis 8 Kohlenstoffatomen, vorzugsweise Methyl, Ethyl, Propyl, Butyl oder Pentyl ist.

2. Verfahren zur Herstellung von Aluminiumsalzen von Alkylhydroxymethylphosphinsäuren gemäß Anspruch 1, **dadurch gekennzeichnet, daß** man phosphonige Säuren (A) der Formel (II) 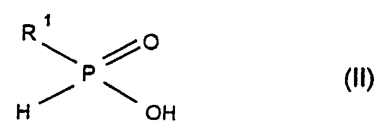 worin R¹ ein geradkettiger oder verzweigter Alkylrest mit 1 bis 8 Kohlenstoffatomen, vorzugsweise Methyl, Ethyl, Propyl oder Pentyl ist, mit Aluminiumhydroxid (B) und wahlweise mit einer oder mehreren Komponenten (C) ausgewählt aus der Gruppe umfassend Formaldehyd, Paraformaldehyd und Trioxan im Molverhältnis A:B:C = 3:1:3 unter Druck in Anwesenheit von Wasser bei Temperaturen von 110 bis 250°C umsetzt.

3. Verfahren nach Anspruch 2, **dadurch gekennzeichnet, daß** die Umsetzung bei einer Temperatur von 130 bis 170°C stattfindet.

4. Verwendung von Aluminiumsalzen von Alkylhydroxymethylphosphinsäuren gemäß Anspruch 1 als Flammschutzmittel in thermoplastischen Kunststoffen.

5. Verwendung von Aluminiumsalzen von Alkylhydroxymethylphosphinsäuren gemäß Anspruch 1 als Flammschutzmittel in Polyester, vorzugsweise Polybutylenterephthalat.

6. Verwendung nach Anspruch 4 oder 5, wobei 5 bis 30 Gew.-%, bezogen auf das Polymer, Phosphinsäuresalz dem Polymer zugesetzt werden.

7. Verfahren zur Herstellung flammgeschützter Polyester, die Aluminiumsalze von Alkylhydroxymethylphosphinsäuren gemäß Anspruch 1 enthalten, **dadurch gekennzeichnet, daß** die Phosphinsäuresalze während der Polykondensation des Polyesters zugesetzt werden.

8. Mit Füll- oder Verstärkungsstoffen versetzte thermoplastische Kunststoffe enthaltend Aluminiumsalze der Alkylhydroxymethylphosphinsäuren gemäß Anspruch 1.

9. Mit Füll- oder Verstärkungsstoffen versetzte Polyester enthaltend 5 bis 30 Gew.-%, bezogen auf das Polymer, Aluminiumsalze der Alkylhydroxymethylphosphinsäuren gemäß Anspruch 1.

## Claims

1. An aluminum salt of an alkylhydroxymethylphosphinic acid of the formula (I) 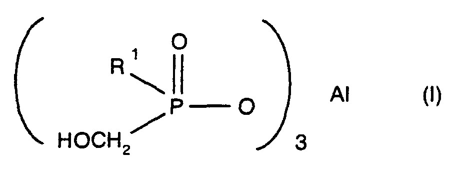 where R¹ is an unbranched or branched alkyl radical having 1 to 8 carbon atoms, preferably methyl, ethyl, propyl, butyl or pentyl.

2. A process for preparing aluminum salts of alkylhydroxymethylphosphinic acids as claimed in claim 1, which comprises reacting phosphonous acids (A) of the formula (II) 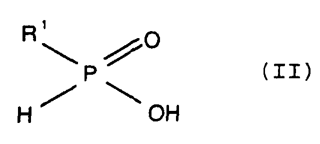 where R¹ is an unbranched or branched alkyl radical having 1 to 8 carbon atoms, preferably methyl, ethyl, propyl or pentyl, with aluminum hydroxide (B) and, optionally, one or more components (C) selected from the group consisting of formaldehyde, paraformaldehyde and trioxane, in a molar ratio A:B:C = 3:1:3 in the presence of water at temperatures of 110 to 250°C under pressure.

3. The process as claimed in claim 2, wherein the reaction takes place at a temperature of 130 to 170°C.

4. The use of aluminum salts of alkylhydroxymethylphosphinic acids as claimed in claim 1 as flame retardants in thermoplastics.

5. The use of aluminum salts of alkylhydroxymethylphosphinic acids as claimed in claim 1 as flame retardants in polyester, preferably poly(butylene terephthalate).

6. The use as claimed in claim 4 or 5, wherein 5 to 30% by weight, based on the polymer, of phosphinic acid salt is added to the polymer.

7. A process for producing low flammability polyesters which comprise aluminum salts of alkylhydroxymethylphosphinic acids as claimed in claim 1, which comprises adding the salts of the phosphinic acid during the polycondensation of the polyester.

8. A thermoplastic to which fillers or reinforcing agents have been added and which comprises aluminum salts of alkylhydroxymethylphosphinic acids as claimed in claim 1.

9. A polyester to which fillers or reinforcing agents have been added and which comprises 5 to 30% by weight, based on the polymer, of aluminum salts of alkylhydroxymethylphosphinic acids as claimed in claim 1.

## Revendications

1. Sels d'aluminium des acides alkylhydroxyméthylphosphiniques de formule (I) 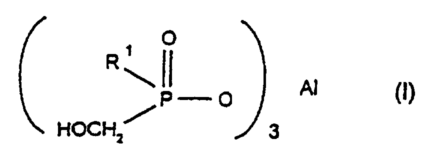 dans laquelle R¹ est un radical alkyle à chaîne droite ou ramifié ayant de 1 à 8 atomes de carbone, de préférence le groupe méthyle, éthyle, propyle, butyle ou pentyle.

2. Procédé pour la préparation de sels d'aluminium d'acides alkylhydroxyméthylphosphiniques selon la revendication 1, **caractérisé en ce qu'**on fait réagir des acides phosphoneux (A) de formule (II) 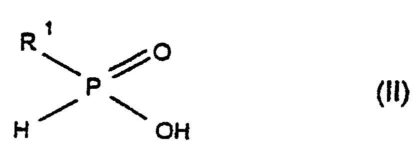 dans laquelle R¹ est un radical alkyle à chaîne droite ou ramifié ayant de 1 à 8 atomes de carbone, de préférence le groupe méthyle, éthyle, propyle ou pentyle, avec de l'hydroxyde d'aluminium (B) et éventuellement avec un ou plusieurs composants (C) choisis dans le groupe comprenant le formaldéhyde, le paraformaldéhyde et le trioxanne en un rapport molaire A:B:C = 3:1:3, sous pression, en présence d'eau, à des températures de 110 à 250°C.

3. Procédé selon la revendication 2, **caractérisé en ce que** la réaction a lieu à une température de 130 à 170°C.

4. Utilisation de sels d'aluminium d'acides alkylhydroxyméthylphosphiniques selon la revendication 1, en tant qu'agents ignifuges dans des matières synthétiques thermoplastiques.

5. Utilisation de sels d'aluminium d'acides alkylhydroxyméthylphosphiniques selon la revendication 1, en tant qu'agents ignifuges dans un polyester, de préférence dans du poly(butylène téréphtalate).

6. Utilisation selon la revendication 4 ou 5, dans laquelle on ajoute au polymère de 5 à 30 % en poids, par rapport au polymère, d'un sel d'acide phosphinique.

7. Procédé pour la préparation de polyesters ignifugés qui contiennent des sels d'aluminium d'acides alkylhydroxyméthylphosphiniques selon la revendication 1, **caractérisé en ce que** les sels d'acide phosphinique sont ajoutés pendant la polycondensation du polyester.

8. Matières synthétiques thermoplastiques additionnées de charges ou de renforts, contenant des sels d'aluminium des acides alkylhydroxyméthylphosphiniques selon la revendication 1.

9. Polyesters additionnés de charges ou de renforts, contenant de 5 à 30 % en poids, par rapport au polymère, de sels d'aluminium des acides alkylhydroxyméthylphosphiniques selon la revendication 1.
